# EUROPÄISCHE PATENTSCHRIFT

(11) **EP 3 771 494 B1**
(45) Veröffentlichungstag und Bekanntmachung des Hinweises auf die Patenterteilung: **15.09.2021**
(21) Anmeldenummer: 20186843.7
(22) Anmeldetag: 21.07.2020
(51) Int. Cl.: B02C 21/02, B07B 1/00, B60R 3/00

(54) **GESTEINS-BEARBEITUNGSANLAGE**
ROCK PROCESSING INSTALLATION
INSTALLATION DE TRAITEMENT DES PIERRES

(30) Priorität: 30.07.2019 DE 102019120582
(43) Veröffentlichungstag der Anmeldung: 03.02.2021
(73) Patentinhaber: KLEEMANN GMBH, 73037 Göppingen (DE)
(72) Erfinder: NAJORK, Jens-Oliver, 73092 Heiningen (DE); RUDOLPH, Lars, 70439 Stuttgart (DE); RUDOLPH, Nils, 70469 Stuttgart (DE)
(74) Vertreter: Herrmann, Jochen

(56) Entgegenhaltungen:
- WO-A2-2007/093645
- JP-A- H0 871 446
- JP-A- 2007 307 481

## Beschreibung

Die Erfindung betrifft eine Gesteins-Bearbeitungsanlage mit einer Prozesseinheit, der eine begehbare Arbeitsbühne zugeordnet ist, wobei die Prozesseinheit einen Vorsprung aufweist, mit dem sie in den von der Arbeitsbühne gebildeten Arbeitsbereich vorsteht, wobei die Arbeitsbühne eine Absturzsicherung, insbesondere in Form eines Geländers aufweist, und wobei die Arbeitsbühne im Bereich des Vorsprungs eine Bühnenverbreiterung aufweist, um einen Arbeitsbereich seitlich des Vorsprungs zu schaffen.

Gesteins-Bearbeitungsanlagen werden zu verschiedenen Zwecken eingesetzt. Sie dienen beispielsweise zum Zerkleinern und/oder Aussieben von Recycling- und/oder Gesteinsmaterial in einem Aufbereitungsprozess. Diese Maschinen lassen sich entweder als mobile oder als stationäre Anlagen einsetzen. Über eine Aufgabeeinheit wird das zu bearbeitende Gut in die Anlage eingefüllt. Hierzu werden üblicherweise Bagger eingesetzt. Der Bagger legt das zu brechende bzw. auszusiebende Gut in einer Förderrinne der Aufgabeeinheit ab. Ausgehend von der Aufgabeeinheit wird das zu bearbeitende Material mit einer Fördereinrichtung in Förderrichtung zu einer nachfolgenden Prozesseinheit geführt. In der nachfolgenden Prozesseinheit wird dann das Material bearbeitet, beispielsweise gebrochen oder gesiebt.

Seitlich sind an der Gesteins-Bearbeitungsanlage Arbeitsbühnen befestigt. Auf diesen kann sich der Maschinenbediener zu Wartungs- oder Kontrollzwecken bewegen.

Bei Gesteins-Bearbeitungsanlage handelt es sich um Maschinen, die erhebliche Außenabmessungen aufweisen. Um sie zum jeweiligen Arbeitsort bewegen zu können, werden Tieflader eingesetzt. Die Außenabmessungen müssen so sein, dass dabei ein Transport im gesetzlich zulässigen Rahmen stattfinden kann. Die Arbeitsbühnen erweisen sich dabei häufig als problematisch, insbesondere dort, wo der maximale Bauraum in der Breite beschränkt ist. Mitunter wird dann die Maschinenkonzeption so gewählt, dass Maschinenbauteile Vorsprünge bilden, die in den Bereich der Arbeitsbühne vorstehen. Diese müssen dann vom Bedien-Personal beim Begehen der Arbeitsbühne überstiegen werden, was aus Sicherheitsgründen vermieden werden soll. Um dies zu vermeiden, werden mitunter Bühnenverbreiterungen eingesetzt, um den Vorsprung umlaufen zu können. Hierdurch werden dann allerdings die Außenabmessungen der Maschine nachteilig beeinträchtigt. Eine entsprechende Anlage gemäß dem Oberbegriff des unabhängigen Anspruchs ist in der WO 2007/093645 A2 offenbart.

Es ist Aufgabe der Erfindung, eine zu Transportzwecken kompakt bauende Gesteins-Bearbeitungsanlage der eingangs erwähnten Art bereitzustellen, die dort wo ein Vorsprung einer Maschinenkomponente in den Arbeitsbereich der Arbeitsbühne vorsteht den Ansprüchen an den Arbeitsschutz Genüge trägt.

Diese Aufgabe wird mit den Merkmalen des Anspruchs 1 gelöst. Demgemäß ist es vorgesehen, dass die Bühnenverbreiterung einen Bodenabschnitt als Arbeitsfläche aufweist, der derart schwenkbar gelagert ist, dass er zwischen einer abgeklappten Arbeitsposition, in der der Bodenabschnitt begehbar ist und einer aufgestellten Transportposition klapp- oder schwenkbar ist. Bei einer solchen Gesteins-Bearbeitungsanlage kann der Bodenabschnitt zu Transportzwecken aufgeklappt werden, sodass die Bühnenverbreiterung die Maschinenabmessungen nicht oder nicht wesentlich beeinträchtigt. Ist die Maschine an den Arbeitsort verbracht worden, so kann der Bodenabschnitt in die Arbeitsposition geklappt werden. Erfindungsgemäß ist es weiterhin vorgesehen, dass die Absturzsicherung im Bereich der Bühnenverbreiterung geführt ist. Auf diese Weise ist die Arbeitssicherheit gewährleistet, wenn der Bodenabschnitt abgeklappt wurde und sich in der Arbeitsposition befindet. Das Bedienpersonal kann somit gesichert den Bereich des Vorsprungs umlaufen. Um zu verhindern, dass das Bedienpersonal dann, wenn sich der Bodenabschnitt in seiner aufgeklappten Transportstellung befindet, den Vorsprung übersteigt, ist es nach der Erfindung vorgesehen, dass mit dem Bodenabschnitt mittelbar oder unmittelbar wenigstens ein Sperrabschnitt derart gekoppelt ist, dass bei einer Verstellung des Bodenabschnitts der Sperrabschnitt verstellt wird, wobei in der Transportposition der Sperrabschnitt den Zugang zu dem Vorsprung zumindest bereichsweise blockiert und in der Arbeitsposition der Sperrabschnitt aus dem Zugangsbereich herausbewegt ist. Der Sperrabschnitt verstellt dann den Weg zum Vorsprung. Dieser kann dann nicht mehr ohne weiteres überstiegen werden, sodass sich eine weitere Verbesserung der Arbeitssicherheit ergibt.

Vorzugsweise ist es so, dass der Sperrabschnitt mit dem Bodenabschnitt zwangsgekoppelt ist. Auf diese Weise verstellt sich bei einer Verschwenkung des Bodenabschnitts auch zwangsgeführt der Sperrabschnitt. Dies garantiert, dass der Sperrabschnitt den Weg zum Vorsprung zuverlässig verstellt, wenn sich der Bodenabschnitt in der aufgeklappten Position befindet.

Für einen optimierten Teile- und Montageaufwand kann es vorgesehen sein, dass der Sperrabschnitt oder die Sperrabschnitte Teil der Absturzsicherung ist/sind.

Gemäß einer bevorzugten Erfindungsvariante kann es vorgesehen sein, dass die Absturzsicherung einen Geländerabschnitt aufweist, der im Bereich der Bühnenverbreiterung geführt ist, dass sich anschließend an die Bühnenverbreiterung einseitig oder beidseitig ein weiterer Geländerabschnitt anschließt, und dass der Geländerabschnitt der Bühnenverbreiterung den Sperrabschnitt aufweist und dieser Geländerabschnitt relativ zu dem oder den anschließenden weiteren Geländerabschnitten verschwenkbar ist.

Im Anschluss an die Bühnenverbreiterung kann die Arbeitsbühne wenigstens einen anschließenden Geländerabschnitt aufweisen. Vorzugsweise handelt es sich hierbei um einen Geländerabschnitt eines feststehenden Bühnenabschnitts, der die Gesamt-Baubreite der Maschine nicht nachteilig beeinflusst. Von diesem Bühnenabschnitt hat ein Benutzer Zugang zur Bühnenverbreiterung. Da der Geländerabschnitt, welcher der Bühnenverbreiterung zugeordnet ist schwenkbar ist und den Sperrabschnitt aufweist, kann er platzsparend zu Transportzwecken verschwenkt werden, wobei gleichzeitig der Sperrabschnitt in die Blockierstellung verbracht werden kann. Hierdurch wird eine denkbar einfache Bedienung möglich.

Wenn vorgesehen ist, dass der Bodenabschnitt in der aufgestellten Transportposition den Vorsprung zumindest bereichsweise seitlich abdeckt, so wird ein Schutz der Maschinenkomponente, die den Vorsprung bildet, erreicht.

Eine denkbare Erfindungsgestaltung ist derart, dass die Prozesseinheit eine Begrenzung aufweist, die die Arbeitsbühne auf der der Absturzsicherung abgewanden Seite begrenzt, dass der Vorsprung von der Begrenzung vorsteht, und dass sich der Sperrabschnitt in der Transportposition zwischen der Begrenzung und dem aufgestellten Bodenabschnitt erstreckt. Der Benutzer kann sich in der Arbeitsposition der Bühnenverbreiterung gesichert zwischen der Begrenzung und der Absturzsicherung bewegen. In der Transportposition verstellt der Sperrabschnitt diesen Bereich.

Eine einfache Bedienung wird gemäß einer Erfindungsvariante dadurch erreicht, dass die Absturzsicherung einen Handlauf aufweist, der sich zumindest bereichsweise in Richtung der Längserstreckung des Bodenabschnitts erstreckt, und dass der Handlauf derart zur Schwenklagerung des Bodenabschnitts, vorzugsweise zumindest bereichsweise exzentrisch zu dieser, angeordnet ist, dass über ihn eine Kraft eingeleitet werden kann, um den Bodenabschnitt zwischen der Arbeitsposition und der Transportposition zu verstellen. Der Handlauf dient damit gleichzeitig als Griff, der bequem zugänglich ist und über den sich die Absturzsicherung und mit ihm der Bodenabschnitt verstellen lassen.

Gemäß einer weiteren Erfindungsalternative kann es vorgesehen sein, dass die Arbeitsbühne zwei Bühnenabschnitte aufweist, wobei die Bühnenabschnitte unter Vermittlung der Bühnenverbreiterung ineinander überführt sind, dass die Absturzsicherung zwei Sperrabschnitte aufweist, dass der erste Sperrabschnitt in der Transportposition den Zugang vom ersten Bühnenabschnitt und der zweite Sperrabschnitt in der Transportposition den Zugang vom zweiten Bühnenabschnitt blockiert. Hierdurch lässt sich mit geringem Bauaufwand eine beidseitige Sicherung des Vorsprungs vor unbefugten Zugang erreichen. Wenn es zudem vorgesehen ist, dass die beiden Sperrabschnitte derart miteinander gekoppelt sind, dass sie bei einer Verstellung des Bodenabschnitts von der Arbeitsposition in die Transportposition simultan miteinander verstellt werden, dann wird eine einfache Bedienung möglich. Insbesondere lässt sich bei einer Verschwenkung der Absturzsicherung ausgehend von einem Bühnenabschnitt auch der auf der gegenüberliegenden Seite angeordnete Zugang gleichzeitig sperren.

Gemäß einer Erfindungsvariante kann es auch vorgesehen sein, dass an den Bodenabschnitt ein Steuerhebel über ein Steuergelenk angekoppelt ist, dass der Steuerhebel über ein weiteres Steuergelenk mittelbar oder unmittelbar mit dem Sperrabschnitt gekoppelt ist, und dass der Sperrabschnitt um eine Schwenkachse, welche von einem, vorzugsweise ortsfesten Gelenk gebildet ist, schwenkbar ist, wobei das weitere Steuergelenk und das Gelenk zueinander beabstandet angeordnet sind. Über den Steuerhebel werden die Bewegungen des Bodenabschnitt und des Sperrabschnitts miteinander gekoppelt, insbesondere zwangsgekoppelt. Bei einer Verschwenkung des Sperrabschnitts um das Gelenk wird über den Steuerhebel der Bodenabschnitt mitgenommen und ebenfalls verschwenkt. Dies ermöglicht eine einfache Bedienung. Wenn ein ortsfestes Gelenk verwendet ist, um das der Sperrabschnitt schwenkt, dann wird eine einfache Kinematik möglich. Insbesondere kann es hierbei auch vorgesehen sein, dass der Bodenabschnitt mittels wenigstens eines Bodengelenks um eine Dreh- oder Schwenkachse verschwenkbar ist. Hierbei kann es sich insbesondere auch um eine ortsfeste Lagerung handeln. Wenn weiterhin vorgesehen ist, dass dieses Bodengelenk, die beiden Steuergelenke und das Gelenk ein Vier-Gelenkssystem bilden, dann wird eine besonders stabile Führung möglich. Das zweite Steuergelenk und das Gelenk können insbesondere der Absturzsicherung zugeordnet werden. Über den Steuerhebel wird eine stabile Ankopplung der Absturzsicherung an den Bodenabschnitt möglich, was zu einer verbesserten Stabilität beiträgt.

Eine stabile Ankopplung des Steuerhebels an den Bodenabschnitt gelingt insbesondere dann einfach, wenn vorgesehen ist, dass der Bodenabschnitt einen Begrenzungsabschnitt aufweist, der in der Arbeitsposition von dem Bodenabschnitt aufsteigt, und dass der Steuerhebel unter Vermittlung des Steuergelenks an dem Begrenzungsabschnitt gelenkig angelenkt ist. Insbesondere kann es dabei auch vorgesehen sein, dass der Begrenzungsabschnitt einteilig von dem Bodenabschnitt abgewinkelt ist.

Eine erfindungsgemäße Gesteins-Bearbeitungsanlage kann auch dergestalt sein, dass der Geländerabschnitt den Handlauf und beabstandet dazu einen Sicherungsabschnitt, insbesondere ein Sicherungsrohr aufweist, wobei sich der Sicherungsabschnitt zumindest bereichsweise in die gleiche Richtung wie der Handlauf erstreckt, und dass der Handlauf und der Sicherungsabschnitt mittels wenigstens einer Strebe und/oder mittels des Sperrabschnitts miteinander verbunden sind. Der Handlauf und der Sicherungsabschnitt verhindern zuverlässig den Absturz, wenn sich ein Benutzer auf der Arbeitsbühne bewegt. Dadurch dass der Sperrabschnitt nun in diese Struktur eingebunden ist, in dem er den Handlauf mit dem Sicherungsabschnitt verbindet, kommt ihm eine Doppelfunktion zu. Zum einen steift er die gebildete Geländestruktur aus. Zum anderen dient er bestimmungsgemäß in der Transportposition als Blockade des Zugangs zum Vorsprung.

Eine nach der Erfindung bevorzugte Gesteins-Bearbeitungsanlage kann insbesondere dergestalt sein, dass der Sicherungsabschnitt im Bereich seiner längsseitigen Enden Verbindungsabschnitte aufweist, die sich in Richtung der Breite der Bühnenverbreiterung erstrecken, dass im Bereich der freien Enden der Verbindungsabschnitte Lagerabschnitte gebildet sind, die die Gelenke mit gemeinsamer Drehachse bilden, um die der Geländerabschnitt verschwenkbar ist. Auf diese Weise wird mit geringem Konstruktionsaufwand eine stabile Drehlagerung für den Geländerabschnitt gebildet.

Zur Positionssicherung kann es insbesondere vorgesehen sein dass die Arbeitsposition und/oder die Transportposition des Bodenabschnitts mittels einer formschlüssigen Verbindung, beispielsweise mit einem Klappstecker, einem Bolzen oder einer Anschlagverbindung gesichert ist.

Die Erfindung wird im Folgenden anhand eines in den Zeichnungen dargestellten Ausführungsbeispiels näher erläutert. Es zeigen:
- Figur 1:: eine Gesteins-Bearbeitungsanlage in perspektivischer Ansicht,
- Figur 2:: eine schematische Darstellung die Gesteins-Bearbeitungsanlagen gemäß Figur 1 in Seitenansicht,
- Figur 3:: ein der Figur 1 entnommenes Detail der Gesteins-Bearbeitungsanlagen in perspektivischer Seitenansicht,
- Figur 4:: das Detail gemäß Figur 3 in einer veränderten Perspektive,
- Figur 5:: das Detail gemäß den Figuren 3 und 4 in einer Ansicht von vorne,
- Figur 6:: die Darstellung gemäß Figur 3, jedoch in einer veränderten Betriebsposition,
- Figur 7:: die Darstellung gemäß Figur 4, jedoch in der veränderten Betriebsposition gemäß Figur 6.

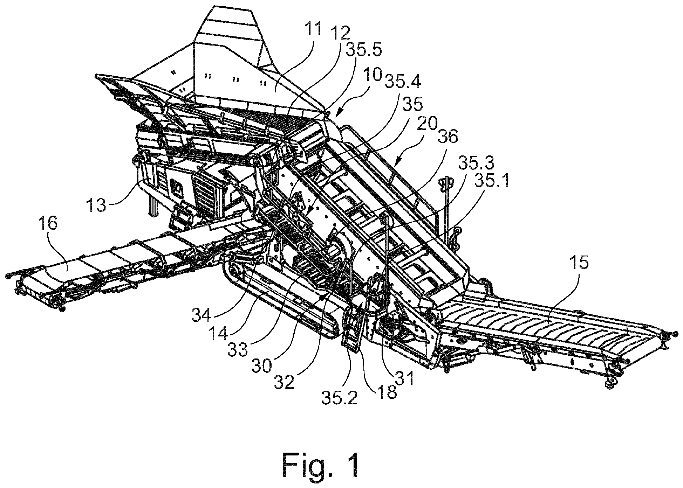

Figur 1 zeigt eine Gesteins-Bearbeitungsanlage 10 an der die Erfindung beispielhaft erläutert werden soll. Bei dieser Gesteins-Bearbeitungsanlage 10 handelt es sich um eine Siebmaschine. Allerdings ist die Erfindung auf die Anwendung bei einer Siebmaschine nicht beschränkt. Vielmehr kann die Erfindung auch bei einer anderen Gesteinsbearbeitungsanlage, beispielsweise bei einem Gesteinsbrecher, insbesondere einem Backenbrecher oder einem Rotationsprallbrecher eingesetzt werden. Weiterhin kann die Erfindung auch bei kombinierten Gesteinsbrechanlagen mit Siebanlagen eingesetzt werden. Die nachfolgenden Erläuterungen sind daher nur beispielhaft anhand einer Siebanlage beschrieben. Die nachfolgenden Ausführungen gelten insbesondere für die vorgenannten Gesteins-Bearbeitungsanlagen.

Wie Figur 1 zeigt, weist die Gesteins-Bearbeitungsanlage 10 ein Maschinengestell 13 auf, welches von Fahrwerken 14, die beispielsweise als Kettenlaufwerke ausgebildet sind, getragen wird. Weiterhin weist die Gesteins-Bearbeitungsanlage 10 einen Aufgabetrichter 11 auf. Über diesen kann sie mit zu bearbeitendem Gesteinsmaterial beschickt werden. Im Bereich des Aufgabetrichters 11 ist ein Trichterabzugsband 12 vorgesehen.

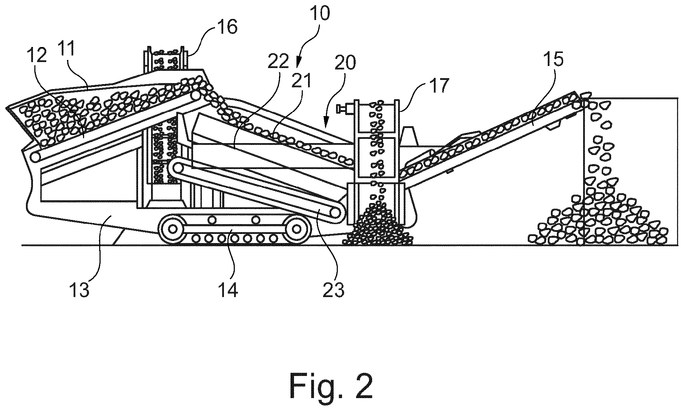

Im Anschluss an den Aufgabetrichter 11 besitzt die Gesteins-Behandlungseinrichtungen 10 eine Prozesseinheit 20. Bei der Prozesseinheit 20 handelt es sich vorliegend um eine Siebvorrichtung. Der Aufbau und die Funktion dieser Siebvorrichtung werden nachfolgend unter Bezugnahme auf Figur 2 näher erläutert. Wie diese Darstellung zeigt, weist die Prozesseinheit 20 im Anschluss an das Trichterabzugsband 12 ein Siebdeck 21 auf. Auf dieses Siebdeck wird das Gesteinsmaterial mittels des Trichterabzugsbands 12 gefördert. Das Siebdeck 21 weist einen Siebrost auf, der eine vorbestimmte Maschenweite hat. Gesteinsmaterial, welches aufgrund der Baugröße nicht durch das Siebdeck 21 fallen kann, wird auf ein Transportband 15 und von diesem auf einen Schütthaufen gefördert. Das Gesteinsmaterial, welches durch das Siebdeck 21 fällt, gelangt auf das Siebdeck 22. Das Siebdeck 22 hat wieder eine vorbestimmte Maschenweite. Gesteinsmaterial, welches nicht durch das Siebdeck 22 fällt, wird einem Transportband 17 zugeführt. Dieses Transportband 17 führt seitlich aus dem Arbeitsbereich der Prozesseinheit 20 heraus. Das ausgesiebte Material wird aufgehäuft, wie dies Figur 2 erkennen lässt. Das Siebmaterial, welches durch das Siebdeck 22 fällt, gelangt auf eine Fördereinrichtung 23, beispielsweise ein endlos umlaufendes Förderband. Das ausgesiebte Feinmaterial wird zu einem Transportband 16 geführt und von diesem aus dem Arbeitsbereich der Maschine ausgetragen. Das ausgesiebte Feinmaterial wird wieder seitlich der Maschine aufgehäuft. Die beiden Siebdecks 21 und 22 sind mittels Schwingungsantrieben, insbesondere Exzenter-Antrieben angetrieben.

Das Transportband 15 kann auf eine untere Position versetzt werden, so dass das Überlauf-Oberdeck-Material des Siebdecks 21 und das Überlauf-Unterdeck-Material des Siebdecks 22 über das Transportband 15 ausgetragen wird und somit nur zwei Siebfraktionen ausgesiebt werden. Dementsprechend ist nur ein seitliches Transportband 16 verbaut auf das zweite seitliche Transportband 17 wurde dementsprechend verzichtet, bzw. wurde dieses entweder abgebaut oder in eine Position/Anordnung an der Anlage verbracht in der dieses Transportband entsprechend außer Funktion gesetzt ist.

Weiterhin ist es denkbar, dass das Transportband 16 und das Transportband 17 wahlweise zu einer der beiden Seiten der Maschine angebaut werden kann, wie dies Figur 1 im Vergleich zu Figur 2 ebenfalls erkennen lässt.. Desweiteren ist es denkbar, dass das Transportband 16 und auch das Transportband 17 auf der gleichen Seite der Anlage angeordnet sind.

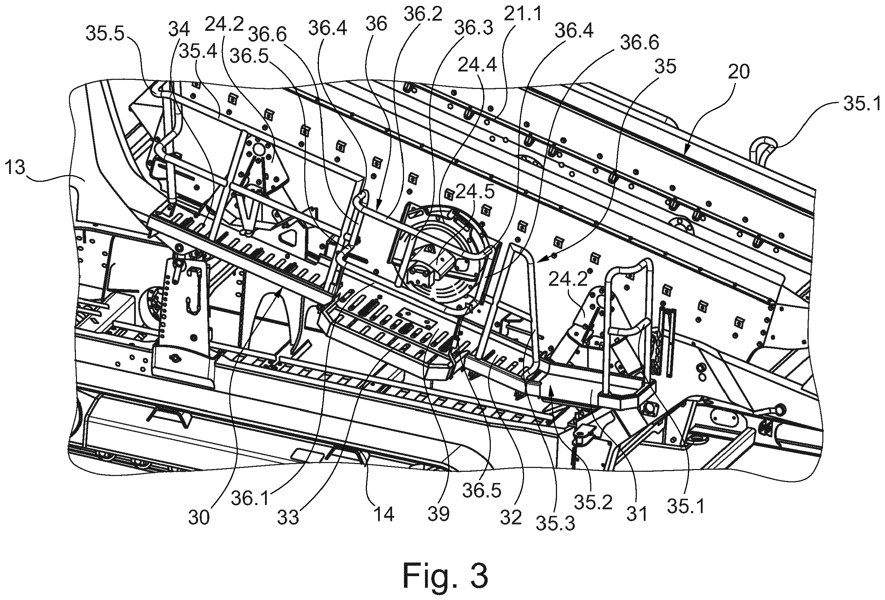

Wie Figur 1 zeigt, besitzt die Maschine Arbeitsbühnen 30 zu beiden Maschinen-Längsseiten. Die Arbeitsbühnen 30 sind über jeweils einen Aufstieg 18, beispielsweise eine Leiter zugänglich. Die Arbeitsbühne 30 ist in Figur 3 deutlicher gezeigt. Wie diese Darstellung erkennen lässt, ist im Anschluss an den Aufstieg 18 eine Zugangsplattform 31 vorgesehen. Die Zugangsplattform 31 geht in einen schräg gestellten Bühnenabschnitt 32 über. An diesen feststehenden Bühnenabschnitt 32 schließt sich eine Bühnenverbreiterung 33 an. Die Bühnenverbreiterung 33 geht in einen weiteren feststehenden Bühnenabschnitt 34 über. Die Bühnenabschnitte 32, 34 weisen eine begehbare Zugangsfläche auf, die in einen Bodenabschnitt 33.1 der Bühnenverbreiterung 33 übergehen.

Wie Figur 3 deutlich erkennen lässt, ist die Arbeitsbühne 30 auf einer Seite mittels einer Begrenzung 24 der Prozesseinheit 20 begrenzt. Die Begrenzung 24 kann beispielsweise in Form einer Wand ausgebildet sein, die sich in Längsrichtung der Arbeitsbühne 30 und damit in Längsrichtung der Gesteins-Behandlungseinrichtung 10 erstreckt.

An die Begrenzung 24 ist eine Komponente der Prozesseinheit 20 angeschlossen. Diese Komponente weist einen Vorsprung 24.5 auf, der außenseitig über die Begrenzung 24 vorsteht. Dabei steht der Vorsprung 24.5 über einen Bodenbereich 39 vor, der sich unterhalb des Vorsprungs 24.5 erstreckt. Der Bodenbereich 39 steht in Flucht zu den beiden Bühnenabschnitten 32 und 34.

Der Bodenabschnitt 33.1 der Bühnenverbreiterung 33 ist in der in Figur 3 gezeigten Arbeitsposition seitlich gegenüber den Bühnenabschnitten 32, 34 ausgestellt. Auf diese Weise kann ein Benutzer, welcher sich auf der Arbeitsbühne 30 bewegt bei einem Gang zwischen den beiden Bühnenabschnitten 32, 34 den Vorsprung 24.5 umgehen, ohne dass dieser überstiegen werden muss.

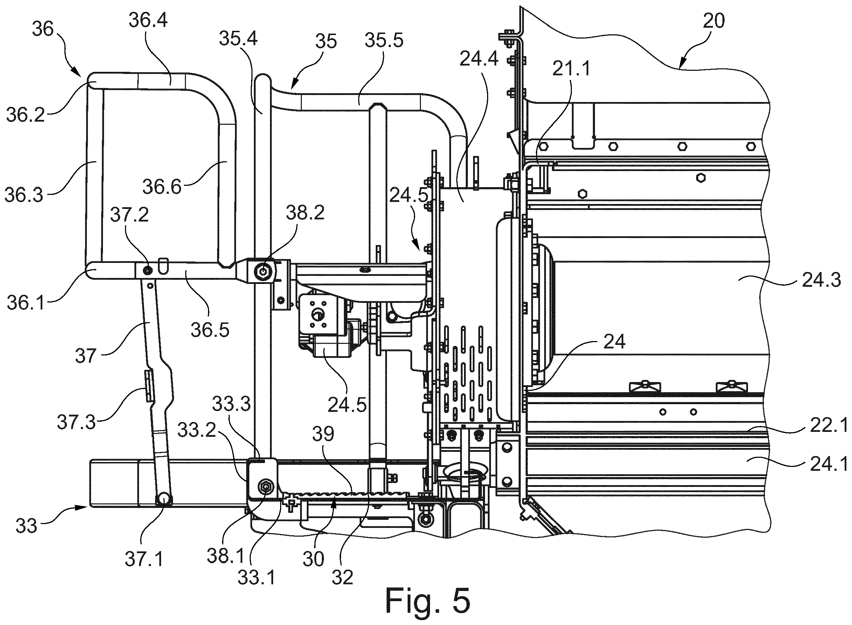

Die Anordnung des Vorsprungs 24.5 wird besonders in Figur 5 deutlich. Wie diese Darstellung veranschaulicht, kann der Vorsprung 24.5 beispielsweise einen Motor 24.6 und ein Exzentergetriebe 24.4 umfassen, wobei der Motor 24.6 das Exzentergetriebe 24.4 zur Erzeugung von Exzenterschwingungen antreibt. Das Exzentergetriebe 24.4 ist an die Begrenzung 24 angeflanscht und der Motor 24.5 steht deutlich gegenüber der Begrenzung 24 vor, wobei er den unterhalb des Vorsprungs 24 angeordneten Bodenbereich 39 überragt.

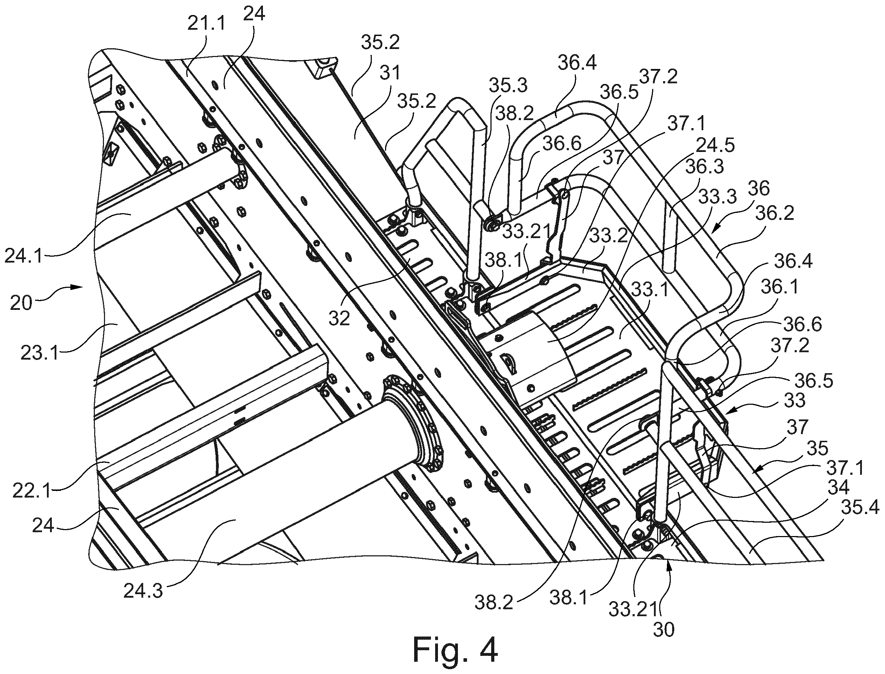

Figur 4 zeigt, dass zwischen zwei benachbarten Begrenzungen 24 ein Arbeitsbereich der Prozesseinheit 20 gebildet ist. Eine Exzenter-Welle, welche an das Exzentergetriebe 24.4 angeschlossen ist, ist zwischen den beiden Begrenzungen 24 geführt und verläuft geschützt innerhalb einem Mantelrohr 34.3. Figur 4 zeigt weiterhin auch eine Siebdeckauflage 21.1 auf der das Siebdeck 21 auswechselbar befestigt werden kann. Weiterhin ist eine Siebdeckauflage 22.1 für das Siebdeck 22 gezeigt. Schließlich sind auch Fördermittel 23.1 für die Fördereinrichtung 23 gezeigt. Zur Aussteifung der beiden Begrenzungen 24 gegeneinander sind weiteren Streben 24.1 vorgesehen, die sich zwischen den Begrenzungen im Arbeitsbereich erstrecken.

Außenseitig sind die Streben 24.1 zusätzlich über Stützeinrichtungen 24.2 mit den Begrenzungen 24 verschraubt.

Wie Figur 3 weiter erkennen lässt, ist die Arbeitsbühne 30 auf der der Begrenzung 24 gegenüberliegenden Seite mittels einer Absturzsicherung 35 begrenzt. Die Absturzsicherung 35 kann mehrere Abschnitte aufweisen. Im vorliegenden Ausführungsbeispiel weist die Absturzsicherung einen Sicherungsabschnitt 35.1 im Bereich der Zugangsplattform 31 auf. Weiterhin ist ein feststehender Geländerabschnitt 35.3 beabstandet zu dem Sicherungsabschnitt 35.1 angeordnet. Dieser Geländerabschnitt 35.3 ist dem Bühnenabschnitt 32 fest zugeordnet. Zwischen dem Sicherungsabschnitt 35.1 und dem Geländerabschnitt 35.3 ist ein Zugangsbereich 35.2 aus der Absturzsicherung 35 ausgespart. Über diesen Zugangsbereich 35.2 ist die Zugangsplattform 31 über den Aufstieg 18 zugänglich.

Ein weiterer Geländerabschnitt 35.4 der Absturzsicherung ist dem Bühnenabschnitt 34 zugeordnet. An diesen Geländerabschnitt 35.4 schließt sich ein Endabschnitt 35.5 an. Dieser überbrückt den Bereich zwischen dem Geländerabschnitt 35.4 und der Begrenzung 24 der Prozesseinheit 20.

Zwischen den beiden Geländerabschnitten 35.3 und 35.4 ist ein Geländerabschnitt 36 angeordnet. Dieser Geländerabschnitt 36 ist der Bühnenverbreiterung 33 zugeordnet.

Der Aufbau des Geländerabschnitts 36 ist deutlicher in Figur 4 zu erkennen. Wie diese Darstellung veranschaulicht, weist der Geländerabschnitt 36 einen Handlauf 36.2 auf. Dieser Handlauf 36.2 ist vorzugsweise als Profilabschnitt, insbesondere als Hohlprofil ausgebildet.

Der Handlauf 36.2 weist einen Abschnitt auf, der sich in Längserstreckung der Bühnenverbreiterung 33 erstreckt. Von diesem Abschnitt sind Verbindungsabschnitte 36.4 abgewinkelt. Diese Verbindungsabschnitte 36.4 verlaufen in Richtung der Breite der Bühnenverbreiterung 33. Die Verbindungsabschnitte 36.4 gehen jeweils in einen Sperrabschnitt 36.6 über. Der Sperrabschnitt 36.6 ist vorzugsweise einteilig von dem zugeordneten Verbindungsabschnitt 36.4 abgebogen.

Unterhalb des Handlaufs 36.2 und beabstandet zu diesem ist ein Sicherungsabschnitt 36.1 angeordnet. Der Sicherungsabschnitt 36.1 kann ebenfalls in Form eines Profilabschnitts, insbesondere als Hohlprofil ausgebildet sein. An seinen beiden längsseitigen Enden weist der Sicherungsabschnitt 36.1 Verbindungsabschnitte 36.5 auf. Diese Verbindungsabschnitte 36.5 können einteilig von dem Sicherungsabschnitt 36.1 abgebogen sein oder als separate Bauteile ausgeführt sein, die mit dem Sicherungsabschnitt 36.1 verbunden, insbesondere verschraubt sind.

Der Handlauf 36.2 und der Sicherungsabschnitt 36.1 können mit einem oder wie Figur 4 zeigt mit zwei Sperrabschnitten 36.6 miteinander verbunden sein. Beispielsweise kann der eine oder können beide Sperrabschnitte 36.6 einteilig von dem Handlauf 36.2 abgebogen sein. Die freien Enden der Sperrabschnitte 36.6 können beispielsweise mit den Verbindungsabschnitten 36 verbunden, vorzugsweise verschweißt sein. Zusätzlich oder alternativ kann es vorgesehen sein, dass der Handlauf 36.2 und der Sicherungsabschnitt 36.1 mit zumindest einer Strebe 36.3 verbunden sind.

Der Geländerabschnitt 36 bildet an den längsseitigen Enden Lagerabschnitte. Diese Lagerabschnitte können beispielsweise von den Enden der Verbindungsabschnitte 36.5 gebildet sein. Diese Lagerabschnitte sind unter Verwendung eines Gelenks 38.2 an, beispielsweise einen Holm des anschließenden festen Geländerabschnitts 35.3, 35.4 schwenkbar angekoppelt. Dabei bilden die beiden Gelenke 38.2 eine gemeinsame Schwenkachse.

Wie Figur 4 weiter erkennen lässt, ist der Bodenabschnitt 33.1 schwenkbar an Bodengelenken 38.1 befestigt. Die beiden Bodengelenke 38.1 bilden eine gemeinsame Schwenkachse, die sich vorzugsweise parallel zu dem Bodenabschnitt 33.1 erstreckt. Zur Ausbildung der beiden Bodengelenke 38.1 kann beispielsweise an den Bodenabschnitt 33.1 eine Abwinklung angeschlossen sein, die als Rutschsicherung einen Begrenzungsabschnitt 33.2 bildet. Dieser Begrenzungsabschnitt 33.2 steigt von dem Bodenabschnitt 33.1 auf. Dem Bodenabschnitt 33.1 abgewandt geht der Begrenzungsabschnitt in eine einwärtsgerichteter Abkantung über. Diese Abkantung steift den Begrenzungsabschnitt 33.2 aus.

Der Begrenzungsabschnitt 33.2 weist Lagerabschnitte 33.21 auf, die sich in Richtung der Breite der Bühnenverbreiterung 33 erstrecken. Durch Lageraufnahmen dieser Lagerabschnitte 33.21 und dazu in Flucht stehender Lagerböcke sind Lagerbolzen hindurchgeführt, sodass sich die Bodengelenke 38.1 ergeben.

Beabstandet zu der von den Bodengelenken 38.1 gebildeten Gelenksachse sind auf gegenüberliegenden Seiten der Bühnenverbreiterung 33 Steuerhebel 37 angeordnet. Die Steuerhebel 37 sind jeweils über Steuergelenke 37.1, 37.2 an den Sicherungsabschnitt 36.1 und den Bodenabschnitt 33.1 schwenkbar angekoppelt. Beispielsweise kann die Zuordnung dabei so getroffen werden, dass der Steuerhebel 37 im Bereich des Lagerabschnitts 33.21 über das Steuergelenk 37.1 angeschlossen ist. Das zweite Steuergelenk 37.2 kann im Bereich des Verbindungsabschnitts 36.5 angeordnet sein. Die beiden Steuergelenke 37.1 und die beiden Steuergelenke 37.2 bilden jeweils eine gemeinsame Schwenkachse.

Die Anordnung der Gelenke 38.2, der Bodengelenke 38.1 und der Steuergelenke 37.1, 37.2 lässt sich deutlicher der Figur 5 entnehmen. Wie diese Darstellung zeigt, bilden jeweils ein Gelenk 38.2, ein Bodengelenk 38.1 und zwei Steuergelenke 37.1, 37.2 ein Vier-Gelenkssystem, das eine stabile und schwenkbare Zuordnung des Bodenabschnitts 33 zu dem Geländerabschnitt 36 schafft.

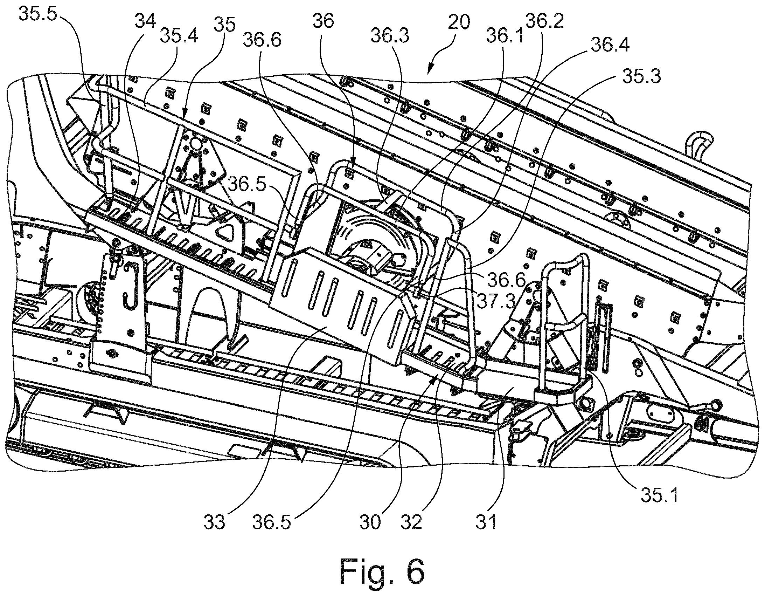

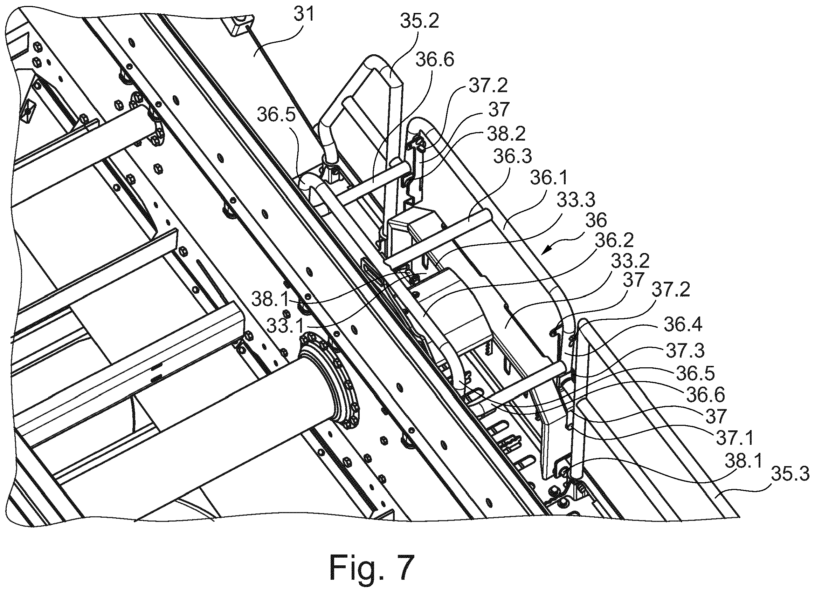

Ausgehend von der in den Figuren 1 bis 5 gezeigten Arbeitsposition kann die Bühnenverbreiterung 33 in eine Transportposition gebracht werden. Diese Transportposition ist in den Figuren 6 und 7 veranschaulicht.

Um die Bühnenverbreiterung 33 in die Transportposition zu bewegen, kann ein Benutzer, der beispielsweise auf dem Bühnenabschnitt 32 steht den Geländerabschnitt 36 am Handlauf 36.2 greifen und nach oben ziehen. Bei dieser Bewegung schwenkt der Geländerabschnitt 36 um die ortsfeste, und von den beiden Gelenken 38.2 gebildete Schwenkachse. Da der Geländerabschnitt 36 über die beiden Steuerhebel 37 an den Bodenabschnitt 33.1 zwangsgekoppelt ist, wird eine Bewegungskraft in den Bodenabschnitt 33.1 eingetragen. Über die exzentrische Zuordnung des Steuergelenks 37.1 zu dem Bodengelenk 38.1 erfolgt die Einbringung eines Drehmoments. Dieses Drehmoment bewirkt, dass der Bodenabschnitt 33.1 ausgehend von seiner abgeklappten und in den Figuren 1 bis 5 gezeigten Arbeitsposition in die in den Figuren 6 und 7 gezeigte Transportposition geschwenkt wird. Die Schwenkbewegung erfolgt dabei über die ortsfeste und von den beiden Bodengelenken 38.1 gebildete Schwenkachse.

Wie die Figuren 5 bis 7 erkennen lassen, weist zumindest einer der Steuerhebel 37 einen Anschlag 37.3 auf. Über diesen Anschlag 37.3 kann die Schwenkbewegung begrenzt werden. Dabei ist es so, dass der Anschlag 37.3 an einem ortsfesten Bauteil, insbesondere an dem Lagerbereich im Bereich des Gelenks 38.2, anschlägt. Vorzugsweise wird dabei ein Gegenanschlag von dem Geländerabschnitt 36 selbst gebildet.

Die aufgeklappte und in den Figuren 6 und 7 gezeigte Transportposition kann mittels einer formschlüssigen Verbindung, beispielsweise mittels eines Bolzens oder dergleichen arretiert werden.

In der aufgeklappten Transportposition überdeckt der Bodenabschnitt 33.1 seitlich den Vorsprung 24 und bildet somit einen seitlichen Berührschutz.

Wie die Figuren 6 und 7 weiter erkennen lassen, sind die beiden Sperrabschnitte 36.6 in der Transportposition so angeordnet, dass der eine Sperrabschnitt 36.6 den Zugang vom ersten Bühnenabschnitt 32 und der zweite Sperrabschnitt 36.6 in der Transportposition den Zugang vom zweiten Bühnenabschnitt 34 blockiert. Besonders bevorzugt ist es so, dass die zwischen dem Handlauf 36.2 und dem Sicherungsabschnitt 36.1 gebildete Geländerhöhe im Wesentlichen der Durchgangsbreite der Bühnenabschnitte 32, 34 entspricht, wie dies Figur 7 zeigt. Dabei kann zwar zwischen dem Handlauf 36.2 und der Begrenzung 24 ein Abstandsbereich gebildet sein. Dieser soll aber nur so groß sein, dass ein Benutzer sich nicht durch diesen Abstandsbereich hindurch bewegen kann.

Figur 7 lässt weiter erkennen, dass auch die Strebe 36.3 im eingeschwenkten Zustand des Geländerabschnitts 36 oberhalb des Vorsprungs 24.5 angeordnet ist und somit eine Blockade bildet, die ein Übersteigen des Vorsprungs 24.5 zusätzlich erschwert.

Um nach einem Transport die Bühnenverbreiterung 33 wieder in die in den Figuren 1 bis 5 gezeigte Arbeitsposition zu schwenken, muss lediglich eine Sicherung zur Festlegung der gezeigten Transportposition (beispielsweise Bolzen) gelöst werden. Dann kann der Geländerabschnitt 36 gegriffen und die Bühnenverbreiterung 33 ausgeschwenkt werden, sodass der Bodenabschnitt 33.1 und der Geländerabschnitt 36 in ihre abgeklappte Arbeitsposition gelangen. Auch diese abgeklappte Arbeitsposition kann mit entsprechenden Anschlägen und/oder formschlüssigen Verbindungen, wie beispielsweise Sicherungsbolzen oder dergleichen, arretiert werden.

## Patentansprüche

1. Gesteins-Bearbeitungsanlage (10) mit einer Prozesseinheit (20), der eine begehbare Arbeitsbühne (30) zugeordnet ist,
wobei die Prozesseinheit (20) einen Vorsprung (24.5) aufweist, mit dem sie in den von der Arbeitsbühne (30) gebildeten Arbeitsbereich vorsteht,
wobei die Arbeitsbühne (30) eine Absturzsicherung (35), insbesondere in Form eines Geländers aufweist,
wobei die Arbeitsbühne (30) im Bereich des Vorsprungs (24.5) eine Bühnenverbreiterung (33) aufweist, um einen Arbeitsbereich seitlich des Vorsprungs (24.5) zu schaffen,
**dadurch gekennzeichnet,**
**dass** die Bühnenverbreiterung (33) einen Bodenabschnitt (33.1) als Arbeitsfläche aufweist, der derart schwenkbar gelagert ist, dass er zwischen einer abgeklappten Arbeitsposition, in der der Bodenabschnitt (33.1) begehbar ist und einer aufgestellten Transportposition klapp- oder schwenkbar ist,
**dass** die Absturzsicherung (35) im Bereich der Bühnenverbreiterung (33) geführt ist,
**dass** mit dem Bodenabschnitt (33.1) mittelbar oder unmittelbar wenigstens ein Sperrabschnitt (36.6) derart gekoppelt ist, dass bei einer Verstellung des Bodenabschnitts (33.1) der Sperrabschnitt (36.6) verstellt wird,
wobei in der Transportposition der Sperrabschnitt (36.6) den Zugang zu dem Vorsprung (24.5) zumindest bereichsweise blockiert und in der Arbeitsposition der Sperrabschnitt (36.6) aus dem Zugangsbereich herausbewegt ist.

2. Gesteins-Bearbeitungsanlage nach Anspruch 1, **dadurch gekennzeichnet, dass** der Sperrabschnitt (36.6) oder die Sperrabschnitte (36.6) Teil der Absturzsicherung (35) ist/sind.

3. Gesteins-Bearbeitungsanlage (10) nach Anspruch 2, **dadurch gekennzeichnet, dass** die Absturzsicherung (35) einen Geländerabschnitt (36) aufweist, der im Bereich der Bühnenverbreiterung (33) geführt ist, dass sich anschließend an die Bühnenverbreiterung einseitig oder beidseitig ein weiterer Geländerabschnitt (35.3, 35.4) anschließt, und dass der Geländerabschnitt (36) der Bühnenverbreiterung (33) den Sperrabschnitt (36.6) aufweist und dieser Geländerabschnitt (36) relativ zu dem oder den anschließenden weiteren Geländeabschnitten (35.3, 35.4) verschwenkbar ist.

4. Gesteins-Bearbeitungsanlage (10) nach einem der Ansprüche 1 bis 3, **dadurch gekennzeichnet, dass** der Bodenabschnitt (33.1) in der aufgestellten Transportposition den Vorsprung (24.5) zumindest bereichsweise seitlich abdeckt.

5. Gesteins-Bearbeitungsanlage (10) nach einem der Ansprüche 1 bis 4, **dadurch gekennzeichnet, dass** die Prozesseinheit (20) eine Begrenzung (24) aufweist, die die Arbeitsbühne (30) auf der der Absturzsicherung (35) abgewandten Seite begrenzt, dass der Vorsprung (24.5) von der Begrenzung (24) vorsteht, und dass sich der Sperrabschnitt (36.6) in der Transportposition zwischen der Begrenzung (24) und dem aufgestellten Bodenabschnitt (33.1) erstreckt.

6. Gesteins-Bearbeitungsanlage (10) nach einem der Ansprüche 1 bis 5, **dadurch gekennzeichnet, dass** die Absturzsicherung (35) einen Handlauf (36.2) aufweist, der sich zumindest bereichsweise in Richtung der Längserstreckung des Bodenabschnitt (33.1) erstreckt, und dass der Handlauf derart zur Schwenklagerung des Bodenabschnitts (33.1), vorzugsweise zumindest bereichsweise exzentrisch zu dieser, angeordnet ist, dass über ihn eine Kraft eingeleitet werden kann, um den Bodenabschnitt (33.1) zwischen der Arbeitsposition und der Transportposition zu verstellen.

7. Gesteins-Bearbeitungsanlage (10) nach einem der Ansprüche 1 bis 6, **dadurch gekennzeichnet, dass** die Arbeitsbühne (30) zwei Bühnenabschnitte (32, 34) aufweist, wobei die Bühnenabschnitte (32, 34) unter Vermittlung der Bühnenverbreiterung (33) ineinander überführt sind, dass die Absturzsicherung (35) zwei Sperrabschnitte (36.6) aufweist, dass der erste Sperrabschnitt (36.6) in der Transportposition den Zugang vom ersten Bühnenabschnitt (32) und der zweite Sperrabschnitt (36.6) in der Transportposition den Zugang vom zweiten Bühnenabschnitt (34) blockiert.

8. Gesteins-Bearbeitungsanlage nach Anspruch 7, **dadurch gekennzeichnet, dass** die beiden Sperrabschnitte (36.6) derart miteinander gekoppelt sind, dass sie bei einer Verstellung des Bodenabschnitts (33.1) von der Arbeitsposition in die Transportposition simultan miteinander verstellt werden.

9. Gesteins-Bearbeitungsanlage (10) nach einem der Ansprüche 1 bis 8, **dadurch gekennzeichnet, dass** an den Bodenabschnitt (33.1) ein Steuerhebel (37) über ein Steuergelenk (37.1) angekoppelt ist, dass der Steuerhebel (37) über ein weiteres Steuergelenk (37.2) mittelbar oder unmittelbar mit dem Sperrabschnitt (36.6) gekoppelt ist, und dass der Sperrabschnitt (36.6) um eine Schwenkachse, welche von einem, vorzugsweise ortsfesten Gelenk (38.2) gebildet ist, schwenkbar ist, wobei das weitere Steuergelenk (37.2) und das Gelenk (38.2) zueinander beabstandet angeordnet sind.

10. Gesteins-Bearbeitungsanlagen (10) nach Anspruch 9, **dadurch gekennzeichnet, dass** der Bodenabschnitt (33.1) einen Begrenzungsabschnitt (33.2) aufweist, der in der Arbeitsposition von dem Bodenabschnitt (33.1) aufsteigt, und dass der Steuerhebel (37) unter Vermittlung des Steuergelenks (37.1) an dem Begrenzungsabschnitt (33.2) gelenkig angelenkt ist.

11. Gesteins-Bearbeitungsanlage (10), nach einem der Ansprüche 1 bis 10, **dadurch gekennzeichnet, dass** der Bodenabschnitt (33.1) mittels wenigstens eines Bodengelenks (38.1) um eine horizontale Dreh- oder Schwenkachse verschwenkbar ist, und dass dieses Bodengelenk (38.1), die beiden Steuergelenke (37.2) und das Gelenk (38.2) ein -Vier-Gelenkssystem bilden.

12. Gesteins-Bearbeitungsanlage (10) nach einem der Ansprüche 1 bis 11, **dadurch gekennzeichnet, dass** der Geländerabschnitt (36) den Handlauf (36.2) und beabstandet dazu einen Sicherungsabschnitt (36.1), insbesondere ein Sicherungsrohr aufweist, wobei sich der Sicherungsabschnitt (36.1) zumindest bereichsweise in die gleiche Richtung wie der Handlauf (36.2) erstreckt, und dass der Handlauf (36.2) und der Sicherungsabschnitt (36.1) mittels wenigstens einer Strebe (36.3) und/oder mittels des Sperrabschnitts (36. 6) miteinander verbunden sind.

13. Gesteins-Bearbeitungsanlage (10) nach Anspruch 12, **dadurch gekennzeichnet, dass** der Sicherungsabschnitt (36.1) im Bereich seiner längsseitigen Enden Verbindungsabschnitte (36.5) aufweist, die sich in Richtung der Tiefe der Bühnenverbreiterung (33) erstrecken, dass im Bereich der freien Enden der Verbindungsabschnitte (36.5) Lagerabschnitte gebildet sind, die die Gelenke (38.2) mit gemeinsamer Drehachse bilden, um die der Geländerabschnitt (36) verschwenkbar ist.

14. Gesteins-Bearbeitungsanlage (10) nach einem der Ansprüche 1 bis 10, **dadurch gekennzeichnet, dass** die Arbeitsposition und/oder die Transportposition des Bodenabschnitts (33.1) mittels einer formschlüssigen Verbindung, beispielsweise einem Klappstecker, einem Bolzen oder einer Anschlagverbindung gesichert ist.

## Claims

1. Rock processing plant (10) with a processing unit (20), with which a walkable working platform (30) is associated,
wherein the processing unit (20) has a projection (24.5) with which it projects into the working area formed by the working platform (30),
wherein the working platform (30) has a fall protection (35), in particular in the form of a railing,
the working platform (30) having a platform widening (33) in the region of the projection (24.5) in order to create a working region to the side of the projection (24.5),
**characterised**
**in that** the platform widening (33) has a floor section (33.1) as a working surface, which is pivotably mounted in such a way that it can be folded or pivoted between a folded-down working position, in which the floor section (33.1) is accessible, and a raised transport position,
**in that** the fall protection (35) is guided in the area of the platform widening (33), in that at least one locking section (36.6) is coupled indirectly or directly to the floor section (33.1) in such a way that the locking section (36.6) is adjusted when the floor section (33.1) is adjusted,
wherein in the transport position the locking section (36.6) blocks the access to the projection (24.5) at least in regions and in the working position the locking section (36.6) is moved out of the access region.

2. Rock processing plant (10) according to claim 1, **characterised in that** the locking section (36.6) or the locking sections (36.6) is/are part of the fall protection (35).

3. Rock processing plant (10) according to claim 2, **characterised in that** the fall protection (35) has a railing section (36) which is guided in the region of the platform widening (33), **in that** a further railing section (35. 3, 35.4) adjoins the platform widening (33) on one or both sides, and **in that** the railing section (36) of the platform widening (33) has the locking section (36.6) and this railing section (36) can be pivoted relative to the adjoining further railing sections (35.3, 35.4).

4. Rock processing plant (10) according to one of the claims 1 to 3, **characterised in that** the floor section (33.1) in the erected transport position laterally covers the projection (24.5) at least in regions.

5. Rock processing plant (10) according to one of the claims 1 to 4, **characterized in that** the processing unit (20) has a boundary (24) which bounds the working platform (30) on the side facing away from the fall protection (35), **in that** the projection (24.5) projects from the boundary (24), and **in that** the locking section (36.6) extends between the boundary (24) and the erected floor section (33.1) in the transport position.

6. Rock processing plant (10) according to one of the claims 1 to 5, **characterised in that** the fall protection (35) has a handrail (36.2) which extends at least in regions in the direction of the longitudinal extension of the floor section (33. 1), and **in that** the handrail is arranged for the pivoting mounting of the floor section (33.1), preferably at least regionally eccentrically thereto, in such a way that a force can be introduced via it in order to adjust the floor section (33.1) between the working position and the transport position.

7. Rock processing plant (10) according to one of the claims 1 to 6, **characterized in that** the working platform (30) has two platform sections (32, 34), the platform sections (32, 34) being transferred into one another with the interposition of the platform widening (33), **in that** the fall protection (35) has two locking sections (36. 6), that the first locking section (36.6) in the transport position blocks the access from the first platform section (32) and the second locking section (36.6) in the transport position blocks the access from the second platform section (34).

8. Rock processing plant (10) according to claim 7, **characterised in that** the two locking sections (36.6) are coupled to each other in such a way that they are simultaneously adjusted with each other when the floor section (33.1) is moved from the working position to the transport position.

9. Rock processing plant (10) according to one of the claims 1 to 8, **characterised in that** a control lever (37) is coupled to the floor section (33.1) via a control joint (37.1), **in that** the control lever (37) is coupled indirectly or directly to the locking section (36. 6) via a further control joint (37.2), and **in that** the locking section (36.6) can be pivoted about a pivot axis which is formed by a preferably fixed joint (38.2), the further control joint (37.2) and the joint (38.2) being arranged at a distance from one another.

10. Rock processing plant (10) according to claim 9, **characterised in that** the floor section (33.1) has a boundary portion (33.2) which rises from the floor section (33.1) in the working position, and that the control lever (37) is articulated to the boundary portion (33.2) by means of the control joint (37.1).

11. Rock processing plant (10), according to one of the claims 1 to 10, **characterised in that** the floor section (33.1) is pivotable by means of at least one ground joint (38.1) about a horizontal axis of rotation or pivoting, and that this ground joint (38.1), the two control joints (37.1, 37.2) and the joint (38.2) form a -four- joint system.

12. Rock processing plant (10) according to one of the claims 1 to 11, **characterised in that** the railing section (36) has the handrail (36.2) and, spaced therefrom, a securing section (36.1), in particular a securing tube, wherein the securing section (36. 1) extends at least regionally in the same direction as the handrail (36.2), and **in that** the handrail (36.2) and the securing section (36.1) are connected to one another by means of at least one strut (36.3) and/or by means of the locking section (36.6).

13. Rock processing plant (10) according to claim 12, **characterised in that** the securing section (36.1) has in the region of its longitudinal ends connecting sections (36.5) which extend in the direction of the depth of the platform widening (33), that in the region of the free ends of the connecting sections (36.5) bearing sections are formed which form the joints (38.2) with a common axis of rotation about which the handrail section (36) can be pivoted.

14. Rock processing plant (10) according to one of the claims 1 to 10, **characterised in that** the working position and/or the transport position of the floor section (33.1) is secured by means of a positive connection, for example a lynch pin, a bolt or a stop connection.

## Revendications

1. Installation de traitement de roches (10) avec une unité de traitement (20), à laquelle est associée une plate-forme de travail (30) praticable,
dans lequel l'unité de traitement (20) a une région de la saillie (24.5) avec laquelle elle fait saillie dans la zone de travail formée par la plate-forme de travail (30),
dans lequel la plate-forme de travail (30) comporte un dispositif de protection contre les chutes (35), en particulier sous la forme d'un garde-corps,
la plate-forme de travail (30) ayant un élargissement de plate-forme (33) dans la région de la saillie (24.5) afin de créer une région de travail sur le côté de la saillie (24.5),
**caractérisé**
**en ce que** la plate-forme élargie (33) présente une section de plancher (33.1) comme surface de travail, qui est montée de manière pivotante de telle sorte qu'elle peut être rabattue ou pivotée entre une position de travail rabattue, dans laquelle on peut marcher sur la section de plancher (33.1), et une position de transport relevée,
**en ce que** le dispositif de protection contre les chutes (35) est guidé dans la zone de l'élargissement de la plate-forme (33),
**en ce qu'**au moins une section de blocage (36.6) est couplée indirectement ou directement à la section de plancher (33.1) de telle sorte que, lorsque la section de plancher (33.1) est déplacée, la section de blocage(36.6) est déplacée, dans lequel, dans la position de transport, la section de blocage (36.6) bloque l'accès à la saillie (24.5) au moins par zones et, dans la position de travail, la section de blocage (36.6) est déplacée hors de la zone d'accès.

2. Installation de traitement de roches (10) selon la revendication 1, **caractérisée en ce que** la section de blocage (36.6) ou les sections de blocage (36.6) font partie de la protection contre les chutes (35).

3. Installation de traitement de roches (10) selon la revendication 2, **caractérisée en ce que** la protection contre les chutes (35) présente une section de garde-corps (36) qui est guidée dans la zone de l'élargissement de la plate-forme (33), **en ce qu'**une autre section de garde-corps (35. 3, 35.4) se raccordent à l'élargissement de la plate-forme (33) sur un ou deux côtés, et **en ce que** la section de garde-corps (36) de l'élargissement de la plate-forme (33) présente la section de blocage (36.6) et cette section de garde-corps (36) peut être pivotée par rapport à la ou aux autres sections de garde-corps (35.3, 35.4) qui s'y raccordent.

4. Installation de traitement de roches (10) selon l'une quelconque des revendications 1 à 3, **caractérisée en ce que** la section de plancher (33.1), dans la position de transport dressée, recouvre latéralement la saillie (24.5) au moins par zones.

5. Installation de traitement de roches (10) selon l'une des revendications 1 à 4, **caractérisée en ce que** l'unité de traitement (20) comprend une limite (24) qui délimite la plate-forme de travail (30) sur le côté opposé à la protection contre les chutes (35), **en ce que** la saillie (24.5) dépasse de la limite (24) et **en ce que** la section de blocage (36.6) s'étend entre la limite (24) et la section de plancher dressée (33.1) dans la position de transport.

6. Installation de traitement de roches (10) selon l'une des revendications 1 à 5, **caractérisée en ce que** la protection contre les chutes (35) présente une main courante (36.2) qui s'étend au moins par zones dans la direction de l'extension longitudinale de la section de plancher (33. 1), et **en ce que** la main courante est disposée pour le montage pivotant de la section de plancher (33.1), de préférence au moins régionalement de manière excentrée par rapport à celle-ci, de telle sorte qu'une force peut être introduite par son intermédiaire afin de déplacer la section de plancher (33.1) entre la position de travail et la position de transport.

7. Installation de traitement de roches (10) selon l'une des revendications 1 à 6, **caractérisée en ce que** la plate-forme de travail (30) présente deux sections de plate-forme (32, 34), les sections de plate-forme (32, 34) étant transférées l'une dans l'autre avec l'interposition de l'élargissement de plate-forme (33), **en ce que** la protection contre les chutes (35) présente deux sections de blocage (36. 6), que la première section de blocage (36.6) dans la position de transport bloque l'accès depuis la première section de plate-forme (32) et la seconde section de blocage (36.6) dans la position de transport bloque l'accès depuis la seconde section de plate-forme (34).

8. Installation de traitement de roches (10) selon la revendication 7, **caractérisée en ce que** les deux sections de blocage (36.6) sont couplées l'une à l'autre de telle manière qu'elles sont simultanément ajustées l'une par rapport à l'autre lorsque la section de plancher (33.1) est déplacée de la position de travail à la position de transport.

9. Installation de traitement de roches (10) selon l'une quelconque des revendications 1 à 8, **caractérisée en ce qu'**un levier de commande (37) est couplé à la section de plancher (33.1) par l'intermédiaire d'une articulation de commande (37.1), **en ce que** le levier de commande (37) est couplé indirectement ou directement à la section de blocage (36. 6) par une autre articulation de commande (37.2), et **en ce que** la section de blocage (36.6) peut pivoter autour d'un axe de pivotement qui est formé par une articulation (38.2) de préférence fixe, l'autre articulation de commande (37.2) et l'articulation (38.2) étant disposées à distance l'une de l'autre.

10. Installation de traitement de roches (10) selon la revendication 9, **caractérisée en ce que** la section de plancher (33.1) présente une section de délimitation (33.2) qui s'élève à partir de la section de plancher(33.1) dans la position de travail, et **en ce que** le levier de commande (37) est articulé à la section de délimitation (33.2) au moyen de l'articulation de commande (37.1).

11. Installation de traitement de roches (10), selon l'une quelconque des revendications 1 à 10, **caractérisée en ce que** la partie de plancher (33.1) peut pivoter autour d'un axe de rotation ou de pivotement horizontal au moyen d'au moins une articulation inférieure (38.1), et **en ce que** cette articulation inférieure (38.1), les deux articulations de commande (37.1, 37.2) et l'articulation (38.2) forment un système à quatre articulations.

12. Installation de traitement de roches (10) selon l'une quelconque des revendications 1 à 11, **caractérisée en ce que** la section de garde-corps (36) comprend la main courante (36.2) et, à distance de celle-ci, une section de fixation (36.1), en particulier un tube de fixation, la section de fixation (36. 1) s'étend au moins par zones dans la même direction que la main courante (36.2), et **en ce que** la main courante (36.2) et la section de fixation (36.1) sont reliées l'une à l'autre au moyen d'au moins une entretoise (36.3) et/ou au moyen de la section de blocage (36.6).

13. Installation de traitement de roches (10) selon la revendication 12, **caractérisée en ce que** la section de fixation (36.1) présente dans la zone de ses extrémités longitudinales des sections de raccordement (36.5) qui s'étendent dans la direction de la profondeur de l'élargissement de la plate-forme (33), **en ce que** dans la zone des extrémités libres des sections de raccordement (36.5) sont formées des sections de support qui forment les articulations (38.2) avec un axe de rotation commun autour duquel la section de main courante (36) peut pivoter.

14. Installation de traitement de roches (10) selon l'une quelconque des revendications 1 à 10, **caractérisée en ce que** la position de travail et/ou la position de transport de la section de plancher (33.1) est fixée au moyen d'une liaison positive, par exemple une goupille, un boulon ou une liaison d'arrêt.
